# EUROPEAN PATENT SPECIFICATION

(11) **EP 3 222 180 B1**
(45) Date of publication and mention of the grant of the patent: **19.01.2022**
(21) Application number: 15861687.0
(22) Date of filing: 17.07.2015
(51) Int. Cl.: A47L 5/12, A47L 9/00, A47L 9/28

(54) **DUST COLLECTOR**
STAUBABSCHEIDER
COLLECTEUR DE POUSSIÈRE

(30) Priority: 20.11.2014 CN 201410667529; 20.11.2014 CN 201420700562 U
(43) Date of publication of application: 27.09.2017
(73) Proprietor: Jiangsu Midea Cleaning Appliances Co., Ltd., Xiangcheng Economic Development Zone Suzhou, Jiangsu 215100 (CN)
(72) Inventor: CHEN, Wei, Suzhou Jiangsu 215100 (CN); HAN, Xiaoyin, Suzhou Jiangsu 215100 (CN)
(74) Representative: RGTH
(86) International application number: PCT/CN2015/084314
(87) International publication number: WO 2016/078434

(56) References cited:
- EP-A1- 0 391 338
- CN-A- 103 023 184
- CN-U- 204 260 663
- CN-Y- 200 948 109
- JP-A- 2000 287 895
- JP-A- 2003 135 320
- JP-A- 2003 135 320
- JP-A- 2003 135 337
- US-A- 6 166 462

## Description

### FIELD

The present disclosure relates to a field of dust collector apparatus, specifically, especially to a dust collector.

### BACKGROUND

An electrical fan assembly including an impeller and an electric motor is usually assembled in a dust collector so as to provide a vacuum environment for the dust collector, thus satisfying a requirement for dust suction.

However, the conventional brushed electric motor of the dust collector in the related art has a high excitation loss, low efficiency and great power consumption, which causes a weak suction power of the dust collector and makes it hard to meet the daily requirement.

In the document JP 2003 135337 A a vacuum cleaner, where an impeller and a brushless motor are located in the downstream side of a dust collection part, is disclosed. The brushless motor should eliminate loss in sliding the carbon brush as well as loss in the copper winding which are generally main component parts in a conventional brushed commutator motor. An external control circuit or an external electric control board is located outside the casing of the dust collection part and is electrically connected with the brushless motor to adjust an operation state of the brushless motor, thus realizing an overall control over the dust collector.

### SUMMARY

The present disclosure seeks to solve at least one of the technical problems existed in the related art. Thus, a dust collector is provided in the present disclosure, which has a strong suction power and a low cost.

A dust collector according to the present invention comprises the combined features of independent claim 1.

In the dust collector according to the present disclosure, by providing the permanent magnet type brushless direct current motor in the dust collector, the excitation loss is eliminated, an output power and efficiency of the electric motor is improved, and hence a suction power and whole performance of the dust collector are improved. In addition, as the permanent magnet type brushless direct current motor according to the present disclosure is simple in structure and convenient to process, the production efficiency is improved and the production cost is cut down effectively, and hence the whole cost of the dust collector is decreased.

According to the present disclosure, the electric control board is located at an axial side of the rotor, a sensor is disposed at a side, adjacent to the rotor, of the electric control board, and the sensor is disposed adjacent to the permanent magnet.

According to an example of the present disclosure, the permanent magnet is disposed at a side, adjacent to the stator, of the rotor.

According to an example of the present disclosure, the dust collector further includes a protection sleeve, and the protection sleeve is disposed to the rotor so as to fix the permanent magnet to the rotor.

According to an example of the present disclosure, the protection sleeve includes: a connecting segment formed in an annular shape, and connected to an end of the rotor; and a fixing segment, in which an end of the fixing segment is connected to a periphery of the connecting segment, the fixing segment is disposed around the rotor and spaced apart from a periphery of the rotor so as to define an accommodating groove, and the permanent magnet is accommodated in the accommodating groove.

According to an example of the present disclosure, a plurality of the permanent magnets is provided and the plurality of the permanent magnets is spaced apart uniformly in a circumferential direction of the rotor.

According to an example of the present disclosure, an insulating piece is disposed at an end, adjacent to the electric control board, of the stator, a protrusion extending towards the electric control board is disposed on the insulating piece, and an end of the protrusion away from the stator contacts the electric control board.

According to an example of the present disclosure, the permanent magnet is made of magnetic steel.

According to an example of the present disclosure, the rotor is disposed inside or outside of the stator.

According to an example of the present disclosure, the permanent magnet is adhered to the rotor.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

Fig. 1 is a sectional view of an electrical fan assembly according to embodiments of the present disclosure;
Fig. 2 is a schematic view of the electrical fan assembly shown in Fig. 1;
Fig. 3 is a partial schematic view of a permanent magnet type brushless direct current motor shown in Fig. 1;
Fig. 4 is a partial exploded view of the permanent magnet type brushless direct current motor shown in Fig. 1.

Reference numerals:
1000: electrical fan assembly;
100: impeller; 101: fan cover; 1011: air inlet; 102: thread fastener;
200: permanent magnet type brushless direct current motor;
1: frame; 11: air outlet;
2: stator; 21: stator ring; 22: stator tooth; 23: fixed portion; 24: stator groove;
3: rotor; 4: permanent magnet; 5: rotary shaft;
6: protection sleeve; 61: connecting segment; 62: fixing segment;
71: first insulating piece; 711: annular first connecting portion; 712: first end face portion; 713: insertion portion;
72: insulating piece; 721: annular second connecting portion; 722: second end face portion; 723: protrusion; 724: snap;
8: built-in electric control board; 9: sensor.

### DETAILED DESCRIPTION

Embodiments of the present disclosure will be described in detail in the following. Examples of the embodiments are shown in the drawings, and the same or similar elements and the elements having same or similar functions are denoted by like reference numerals throughout the descriptions. The embodiments described with reference to the drawings are illustrative, which is only used to explain the present disclosure and should not be construed to limit the present disclosure.

Various embodiments and examples are provided in the following description to implement different structures of the present disclosure. In order to simplify the present disclosure, certain elements and settings will be described. However, these elements and settings are only by way of example and are not intended to limit the present disclosure. In addition, reference numerals may be repeated in different examples in the present disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied.

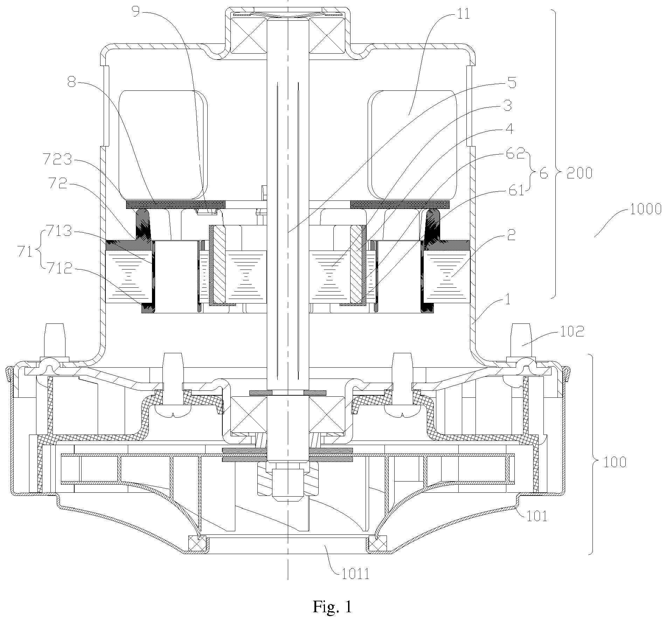

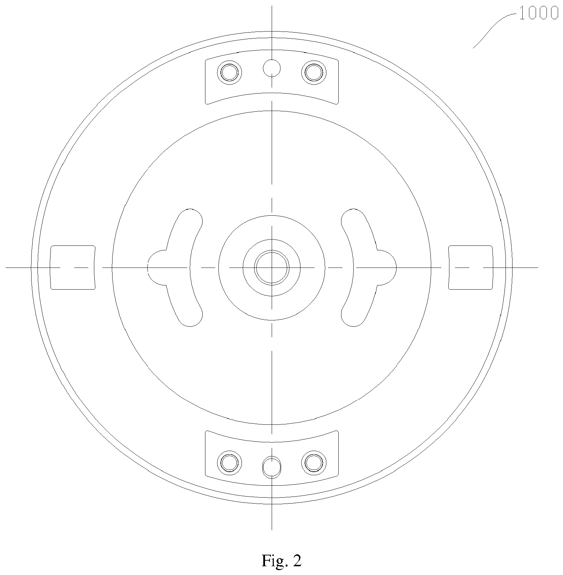

A dust collector (not shown in the figures) according to embodiments of the present disclosure will be described with reference to Fig. 1 to Fig. 4.

As shown in Fig. 1, the dust collector according to embodiments of the present disclosure includes a casing (not shown in the figures), a dust collection system (not shown in the figures), an impeller 100 and a permanent magnet type brushless direct current motor 200.

Specifically, the casing defines a dust suction inlet and an air exhaust port arranged spaced apart so that when a vacuum environment is formed in the casing, air outside the casing can be sucked into the casing via the dust suction inlet and then exhausted through the air exhaust port. The dust collection system is disposed in the casing so as to filter the air entering the casing from the dust suction inlet, that is, the dust collection system is disposed in the casing and located between the dust suction inlet and the air exhaust port, such that the air flowing into the casing can be firstly filtered by the dust collection system, and then be exhausted through the air exhaust port, thus realizing a dust suction effect.

Further, the permanent magnet type brushless direct current motor 200 and the impeller 100 are connected with each other (for example being connected by means of a rotary shaft 5 mentioned below) and both disposed in the casing. The impeller 100 (or fan 100) is located downstream of the dust collection system along a flowing direction of the air in the casing, that is, the air entering the casing can be firstly filtered by the dust collection system and then flow towards the impeller 100. The permanent magnet type brushless direct current motor 200 is located at a side, far away from the dust collection system, of the impeller 100, that is, the air flows towards the permanent magnet type brushless direct current motor 200 after flowing towards the impeller 100, such that the permanent magnet type brushless direct current motor 200 can drive the impeller 100 to rotate so as to enable the vacuum environment to be formed in the casing. In this way, the air outside the casing can be sucked into the casing through the dust suction inlet, filtered by the dust collection system, and then exhausted through the air exhaust port, thus realizing the dust suction effect.

Furthermore, the casing is provided with an electric control board therein, and the electric control board is electrically connected with the permanent magnet type brushless direct current motor 200. When the dust collector is in use, a user can input an instruction to the electric control board, so as to control whether the permanent magnet type brushless direct current motor 200 operates and adjust an operation state of the permanent magnet type brushless direct current motor 200, thus realizing an overall control over the dust collector.

Specifically, the permanent magnet type brushless direct current motor 200 includes a stator 2, a rotor 3 and a permanent magnet 4. The permanent magnet 4 is formed in a block shape, and the rotor 3 and the stator 2 are arranged coaxially. The rotor 3 is rotatable relative to the stator 2, and the permanent magnet 4 is fixed to the rotor 3. For example, in an example shown in Fig. 1, the permanent magnet type brushless direct current motor 200 may be an interior rotor type motor, in which the rotor 3 is disposed inside the stator 2. That is, the rotor 3 is coaxially disposed at an inner side of the stator 2. Preferably, the permanent magnet 4 is disposed at a side, adjacent to the stator 2, of the rotor 3, that is, the permanent magnet 4 is disposed between the rotor 3 and the stator 2 and surrounds an outer circumferential wall of the rotor 3. Thus, this kind of permanent magnet type brushless direct current motor 200 eliminates an excitation loss, and has high efficiency and output power, such that the suction power of the dust collector can be improved effectively, a better dust suction effect is realized, and the user's feeling of the suction power is enhanced in use. Optionally, the permanent magnet 4 is made of magnetic steel. Certainly, the present disclosure is not limited to this, and the permanent magnet 4 may also be made of other materials such as a lodestone.

In addition, the rotor 3 may also be disposed outside the stator 2 (not shown in the figures). For example, the rotor 3 may be coaxially disposed outside the stator 2. Preferably, the permanent magnet 4 is disposed at a side, adjacent to the stator 2, of the rotor 3, that is, the permanent magnet 4 is disposed between the rotor 3 and the stator 2 and surrounds an inner circumferential wall of the rotor 3, in which the permanent magnet type brushless direct current motor 200 is an exterior rotor type motor. The permanent magnet type brushless direct current motor 200 of the interior rotor type is illustrated as an example.

In addition, it should be noted that the permanent magnet 4 may not be disposed at the side, adjacent to the stator 2, of the rotor 3, that is, relative positions of the rotor 3 and the permanent magnet 4 can also be disposed according to practical requirements so as to satisfy the practical requirements better.

The rotor 3 and the stator 2 may be a rotor core and a stator core formed by riveting and superposing cold-rolled silicon steel sheets respectively. Optionally, the permanent magnet 4 is adhered to the rotor 3, that is, the permanent magnet 4 may be connected to the outer circumferential wall of the rotor 3 in an adhesive way. Thus, the permanent magnet type brushless direct current motor 200 may be processed in a simple method and has a low manufacturing cost, which can improve the processing efficiency and reduce the production cost greatly.

In the dust collector according to the present disclosure, by providing the permanent magnet type brushless direct current motor 200 in the dust collector, the excitation loss is eliminated, the output power and efficiency of the electric motor 200 is improved, and hence the suction power and the whole performance of the dust collector are improved. In addition, as the permanent magnet type brushless direct current motor 200 according to the present disclosure is simple in structure and convenient to process, the production efficiency is improved and the production cost is cut down effectively, and hence the whole cost of the dust collector is decreased.

As shown in Fig. 1, in an embodiment of the present disclosure, the permanent magnet type brushless direct current motor 200 may be assembled in a frame 1, and the impeller 100 may be assembled in a fan cover 101. An air inlet 1011 is formed in the fan cover 101 and penetrates the fan cover, an air outlet 11 is formed in the frame 1 and penetrates the frame, and the fan cover 101 and the frame 1 can be fixed together by a threaded fastener 102 so as to confine the permanent magnet type brushless direct current motor 200 and the impeller 100 together to form an electrical fan assembly 1000.

The permanent magnet type brushless direct current motor 200 and the impeller 100 may be connected by means of the rotary shaft 5. One end of the rotary shaft 5 extends into and is fitted in the rotor 3, and the other end of the rotary shaft 5 extends into and is fitted in the impeller 100, such that the rotor 3 can drive the impeller 100 to rotate by means of the rotary shaft 5 to make the air in the casing flow from the air inlet 1011 into the fan cover 101, and then be exhausted out of the frame 1 from the air outlet 11, thereby producing the vacuum environment in the casing.

Preferably, with reference to Fig. 1, the air inlet 1011 is formed in a side of the fan cover 101 away from the permanent magnet type brushless direct current motor 200 and opposite to an axial end of the rotary shaft 5; the air outlet 11 is formed in a circumferential wall of the frame 1 and opposite to a radial direction of an end of the rotary shaft 5 away from the impeller 100 and the permanent magnet type brushless direct current motor 200.

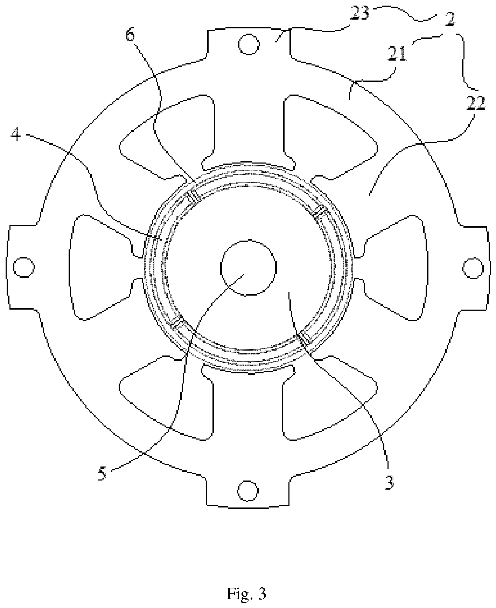

As shown in Fig. 1 and Fig. 3, the stator 2 may be connected with the inner circumferential wall of the frame 1 by means of four fixed portions 23 protruding outwards from an outer circumferential wall of the stator 2, and the rest part of the outer circumferential wall of the stator 2 is spaced apart from the inner circumferential wall of the frame 1 to define a gap for air flow, such that the air which flows into the fan cover 101 from the air inlet 1011 may flow through the gap and finally flow out of the frame 1 from the air outlet 11. Preferably, a space between a bottom wall of the frame 1 away from the impeller 100 and a side of the stator 2 away from the impeller 100 (for example an upper side shown in Fig. 1) is large so as to further increase the amount of air suction of the dust collector, thus further improving the dust suction effect of the dust collector.

A plurality of the permanent magnets 4 is provided and the plurality of the permanent magnets 4 is spaced apart uniformly in a circumferential direction of the rotor 3. For example, in the example shown in Fig. 1 and Fig. 3, four permanent magnets 4 spaced apart from each other uniformly are adhered to the outer circumferential wall of the rotor 3. Thus, the usage requirements can be satisfied and the performance of the electric motor 200 can be guaranteed. It should be noted that the number of the permanent magnet 4 is related to the number of poles of the electric motor 200, for example a three-phase quadrupole motor is matched with four permanent magnets 4.

Further, as shown in Fig. 1, the dust collector may further include a protection sleeve 6. The protection sleeve 6 is disposed to the rotor 3 so as to fix the permanent magnet 4 to the rotor 3, such that the protection sleeve 6 can fix the permanent magnet 4 to the rotor 3 stably and prevent the permanent magnet 4 from separating from and flying away from the rotor 3 during the rotation of the rotor 3 and the permanent magnet 4. Therefore, the reliability of connection of the rotor 3 and the permanent magnet 4 is improved and hence the reliability of operation of the permanent magnet type brushless direct current motor 200 is enhanced.

For example, in a specific example of the present disclosure, with reference to Fig. 1, the protection sleeve 6 includes a connecting segment 61 and a fixing segment 62. The connecting segment 61 is formed in an annular shape and connected to an end, for example an end adjacent to the impeller 100, of the rotor 3. Preferably, an inner-ring diameter of the connecting segment 61 is smaller than an outer diameter of the rotor 3 and larger than an inner diameter of the rotor 3, and an outer-ring edge of the connecting segment 61 is flush with an outer edge of the permanent magnet 4. As a result, an end face of the connecting segment 61 away from the impeller 100 can be adhered to end faces of the permanent magnet 4 and the rotor 3 simultaneously by means of a gel during the assembly, so that the reliability of connection of the permanent magnet 4 and the rotor 3 is guaranteed.

Further, the fixing segment 62 is disposed around the rotor 3 and spaced apart from a periphery of the rotor 3 so as to define an accommodating groove, and the permanent magnet 4 is accommodated in the accommodating groove. For example, in the example shown in Fig. 1, the fixing segment 62 may be formed in a cylindrical shape and sleeved over an outer circumferential wall of the permanent magnet 4 coaxially with the rotor 3. Axial lengths of the fixing segment 62 and the permanent magnet 4 are equal to each other, both of which may be larger than an axial length of the rotor 3. Preferably, an end of the fixing segment 62 adjacent to the impeller 100, an end of the permanent magnet 4 adjacent to the impeller 100, and an end of the rotor 3 adjacent to the impeller 100 are flush with one another, and the end of the fixing segment 62 adjacent to the impeller 100 is connected to an outer circumferential wall of the connecting segment 61. Thus, an inner circumferential wall of the fixing segment 62 can be adhered to the permanent magnet 4 by means of the gel during the assembly so as to further guarantee the reliability of connection of the permanent magnet 4 and the rotor 3.

Preferably, the protection sleeve 6 is formed integrally, that is, the connecting segment 61 and the fixing segment 62 are formed integrally. In this way, by providing the protection sleeve 6 which is convenient to process and assemble, the reliability of connection of the permanent magnet 4 and the rotor 3 is improved effectively, and the permanent magnet 4 is prevented from separating from and flying away from the rotor 3 during the rotation of the rotor 3 and the permanent magnet 4, thus improving the reliability of operation of the permanent magnet type brushless direct current motor 200.

Specifically, the electric control board is located at an axial side of the rotor 3, a sensor 9 is provided at a side, adjacent to the rotor 3, of the electric control board, and the sensor 9 is disposed adjacent to the permanent magnet 4. Three sensors 9 may be provided and spaced apart from each other. For example, in the example shown in Fig. 1, the electric control board may include a built-in electric control board 8 and an external electric control board (not shown in the figures). The external electric control board is disposed to the casing of the dust collector, the built-in electric control board 8 may be disposed in the frame 1 and located at the axial side of the rotor 3, for example a side of the rotor 3 away from the impeller 100 (for example the upper side shown in Fig. 1). The sensor 9 is disposed between the built-in electric control board 8 and the permanent magnet type brushless direct current motor 200. In addition, the sensor 9 may be fixed to the built-in electric control board 8 and electrically connected with the electric control board. The electric control board is electrically connected with a coil winding the stator 2.

Thus, the electric control board may provide current for the coil so that a magnet field for driving the permanent magnet 4 to rotate is produced in the energized coil. As the permanent magnet 4, the protection sleeve 6, the rotor 3 and the rotary shaft 5 are fixed together, the permanent magnet 4 is able to drive the protection sleeve 6, the rotor 3 and the rotary shaft 5 to rotate synchronously, such that the rotary shaft 5 is able to drive the impeller 100 to operate to produce the vacuum environment, which enables the air to flow in from the air inlet 1011 and then flow out form the air outlet 11, thus realizing the dust suction function.

Further, the electric control board is preset with a suction level. When the user inputs an instruction for adjusting the suction level up to the external electric control board, the external electric control board sends a signal for increasing pressure on the coil to the built-in electric control board 8 so as to increase a rotation speed of the rotor 3. At this moment, the sensor 9 is able to detect a change of the rotation speed of the rotor 3 and feed it back to the electric control board. When the rotation speed of the rotor 3 satisfies the requirement corresponding to the gear, the electric control board will not send the instruction for increasing pressure on the coil, and at this moment the rotor 3 is able to keep rotating at a constant and higher rotation speed so that the suction power of the dust collector is increased.

Similarly, when the user inputs an instruction for adjusting the suction level down to the external electric control board, the external electric control board sends a signal for decreasing pressure on the coil to the built-in electric control board 8 so as to reduce the rotation speed of the rotor 3. At this moment, the sensor 9 is able to detect the change of the rotation speed of the rotor 3 and feed it back to the electric control board. When the rotation speed of the rotor 3 satisfies the requirement corresponding to the gear, the electric control board will not send the instruction for decreasing pressure on the coil, and at this moment the rotor 3 is able to keep rotating at a constant and lower rotation speed so that the suction power of the dust collector is decreased.

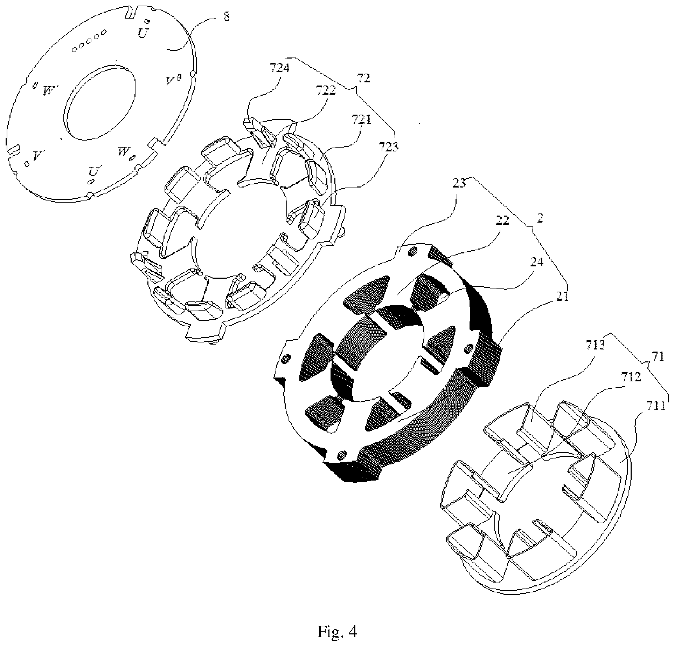

As shown in Fig. 3 and Fig. 4, in an embodiment of the present disclosure, the stator 2 includes a stator ring 21 and a plurality of stator teeth 22. The plurality of the stator teeth 22 is uniformly spaced apart at an inner circumferential wall of the stator ring 21. A stator groove 24 is defined between two adjacent stator teeth 22. The coil passes through the corresponding stator groove 24 and is winded around the corresponding stator tooth 22. It is required to dispose an insulator between the coil and the stator 2 to separate the coil and the stator 2. Preferably, a surface of the stator 2 is provided with an insulating assembly including a first insulating piece 71 and an insulating piece 72. In this way, the coil may be winded around the stator tooth 22 provided with the insulating assembly so as to guarantee that the permanent magnet type brushless direct current motor 200 can operate normally and effectively.

As shown in Fig. 4, the first insulating piece 71 may include an annular first connecting portion 711, a plurality of first end face portions 712 and a plurality of insertion portions 713. The annular first connecting portion 711 and the plurality of first end face portions 712 is disposed at an end of the stator 2 away from the built-in electric control board 8. The annular first connecting portion 711 is configured to cover an end face of the stator ring 21 at a side away from the built-in electric control board 8. The plurality of first end face portions 712 is configured to cover end faces of the plurality of stator teeth 22 at a side away from the built-in electric control board 8 so that the end faces of the stator teeth 22 at the side away from the built-in electric control board 8 are separated from the coil. The plurality of insertion portions 713 has shapes matched with shapes of the plurality of stator grooves 24 so as to cover a side wall of the stator groove 24 to separate the side wall of the stator groove 24 from the coil.

Further, with reference to Fig. 4, the insulating piece 72 is disposed at an end of the stator 2 adjacent to the built-in electric control board 8. The insulating piece 72 may include an annular second connecting portion 721 and a plurality of second end face portions 722. The annular second connecting portion 721 is configured to cover an end face of the stator ring 21 at a side adjacent to the built-in electric control board 8. The plurality of second end face portions 722 is configured to cover end faces of the plurality of stator teeth 22 at a side adjacent to the built-in electric control board 8 so as to separate the end faces of the stator teeth 22 at the side adjacent to the built-in electric control board 8 from the coil.

Further, with reference to Fig. 1 and Fig. 4, the insulating piece 72 is provided with a protrusion 723 extending towards the electric control board, and an end of the protrusion 723 away from the stator 2 contacts the built-in electric control board 8. With reference to Fig. 1, the protrusion 723 may extend from an end face of the annular second connecting portion 721 at a side adjacent to the built-in electric control board 8 toward a direction away from the stator 2, and a free end of the protrusion 723 abuts against an end face of the built-in electric control board 8 at a side adjacent to the stator 2 so that the protrusion 723 can define a distance between the stator 2 and the built-in electric control board 8 effectively and hence define a distance between the rotor 3 and the built-in electric control board 8. That is, a distance between the sensor 9 and the rotor 3 is defined. Thus, the sensor 9 can play a role of detecting the rotation speed of the rotor 3 effectively so as to ensure that the permanent magnet type brushless direct current motor 200 and the dust collector can operate normally and effectively.

Preferably, a plurality of the protrusions 723 may be provided, and the plurality of the protrusions 723 is arranged on the insulating piece 72 and spaced apart from each other, such that the reliability of positioning can be further improved, the reliability of operation of the sensor 9 is improved and hence the overall reliability of operation of the dust collector is improved.

In a specific embodiment of the present disclosure, with reference to Fig. 4, the insulating piece 72 may be further provided with a snap 724 extending towards the built-in electric control board 8. An end of the snap 724 away from the stator 2 is snap-fitted with the built-in electric control board 8, such that the stator 2 can be connected with the built-in electric control board 8 reliably, and it is further guaranteed that the sensor 9 can play the role of detecting the rotation speed of the rotor 3 effectively, thus guaranteeing normal and effective operation of the dust collector.

In the specification, it should be understood that terms such as "up", "down" , "inner", "outer", "axial direction", "radial direction", "circumferential direction" should be construed to refer to the orientation as then described or as shown in the drawings under discussion. These relative terms are for convenience of description and do not require that the present disclosure be constructed or operated in a particular orientation, so shall not be construed to limit the present disclosure.

In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present invention, "a plurality of" means two or more than two, unless specified otherwise.

In the present invention, it should be noted that, unless specified or limited otherwise, the terms "mounted," "connected," "coupled," "fixed" should be understood broadly, and may be, for example, fixed connections, detachable connections, or integral connections; may also be mechanical or electrical connections; may also be direct connections or indirect connections via intervening structures; may also be inner communications or interaction relationships of two elements, which can be understood by those skilled in the art according to specific situations.

In the present invention, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature; while a first feature "below," "under," or "on bottom of" a second feature may include an embodiment in which the first feature is right or obliquely "below," "under," or "on bottom of" the second feature, or just means that the first feature is at a height lower than that of the second feature.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. In the present specification, the illustrative statement of the terms above is not necessarily referring to the same embodiment or example. Furthermore, the particular features, structures, materials, or characteristics may be combined in any suitable manner in one or more embodiments or examples. In addition, the different embodiments or examples as well as the features in the different embodiments or examples described in the specification can be combined or united by those skilled in the related art in the absence of contradictory circumstances.

Although embodiments of the present disclosure have been shown and described, it would be appreciated by those skilled in the art that changes, alternatives, variation and modifications can be made to the embodiments without depart from the scope and principle of the present disclosure. The scope of the present disclosure is defined by the appended claims.

## Claims

1. A dust collector, comprising:
a casing defining a dust suction inlet (1011) and an air exhaust port (11) arranged spaced apart, and provided with an electric control board (8) therein;
a dust collection system arranged in the casing so as to filter a fluid entering the casing from the dust suction inlet (1011);
an impeller (100) disposed in the casing and located downstream of the dust collection system; and
a permanent magnet type brushless direct current motor (200) disposed in the casing, connected with the impeller (100), and located at a side, away from the dust collection system, of the impeller (100), wherein the permanent magnet type brushless direct current motor (200) comprises a stator (2), a rotor (3) and a block-shaped permanent magnet (4), the rotor (3) is disposed coaxially with the stator (2) and rotatable relative to the stator (2), and the permanent magnet (4) is fixed to the rotor (3),
**characterized in that**:
the electric control board (8) is a built-in control board, located at an axial side of the rotor (3), wherein a sensor (9) is disposed at a side, adjacent to the rotor (3), of the built-in electric control board (8), and wherein the sensor (9) is disposed adjacent to the permanent magnet (4).

2. The dust collector according to claim 1, wherein the permanent magnet (4) is disposed at a side, adjacent to the stator (2), of the rotor (3).

3. The dust collector according to claim 2, further comprising:
a protection sleeve (6) provided over the rotor so as to fix the permanent magnet (4) to the rotor (3).

4. The dust collector according to claim 3, wherein the protection sleeve (6) comprises:
a connecting segment (61) formed in an annular shape, and connected to an end of the rotor (3); and
a fixing segment (62), wherein an end of the fixing segment (62) is connected to a periphery of the connecting segment (61), the fixing segment (62) is disposed around the rotor (3) and spaced apart from a periphery of the rotor (3) so as to define an accommodating groove, and the permanent magnet (4) is accommodated in the accommodating groove.

5. The dust collector according to any one of claims 1 to 4, wherein a plurality of the permanent magnets (4) is provided and the plurality of the permanent magnets (4) is spaced apart uniformly in a circumferential direction of the rotor (3).

6. The dust collector according to any one of claims 1 to 5, wherein an insulating piece (72) is disposed at an end, adjacent to the electric control board (8), of the stator (2), a protrusion (723) extending towards the electric control board (8) is disposed on the insulating piece (72), and an end of the protrusion (723) away from the stator (2) contacts the electric control board (8).

7. The dust collector according to any one of claims 1 to 6, wherein the permanent magnet (4) is made of magnetic steel.

8. The dust collector according to any one of claims 1 to 7, wherein the rotor (3) is disposed inside or outside the stator (2).

9. The dust collector according to any one of claims 1 to 8, wherein the permanent magnet (4) is adhered to the rotor (3).

## Patentansprüche

1. Staubsammler, umfassend:
ein Gehäuse, das einen Staubansaugeinlass (1011) und eine Luftauslassöffnung (11) definiert, die beabstandet angeordnet sind, und das mit einer elektrischen Steuerplatine (8) darin versehen ist;
ein Staubsammelsystem, das in dem Gehäuse angeordnet ist, um ein Fluid zu filtern, das von dem Staubansaugeinlass (1011) in das Gehäuse eintritt;
ein Antriebsrad (100), das in dem Gehäuse angeordnet und sich stromabwärts des Staubsammelsystems befindet; und
einen bürstenlosen Permanentmagnetläufer-Gleichstrommotor (200), der in dem Gehäuse angeordnet ist, mit dem Antriebsrad (100) verbunden ist und
sich an einer Seite des Antriebsrads (100) weg von dem Staubsammelsystem befindet, wobei der bürstenlose Permanentmagnetläufer-Gleichstrommotor (200) einen Stator (2), einen Rotor (3) und einen blockförmigen Permanentmagneten (4) umfasst, der Rotor (3) koaxial zum Stator (2) angeordnet und relativ zum Stator (2) drehbar ist, und der Permanentmagnet (4) am Rotor (3) befestigt ist,
**dadurch gekennzeichnet, dass**
die elektrische Steuerplatine (8) eine eingebaute Steuerplatine ist, die an einer axialen Seite des Rotors (3) angeordnet ist, wobei ein Sensor (9) an einer dem Rotor (3) benachbarten Seite der elektrischen Steuerplatine (8) angeordnet ist und wobei der Sensor (9) angrenzend an den Permanentmagneten (4) angeordnet ist.

2. Staubsammler gemäß Anspruch 1, wobei der Permanentmagnet (4) an einer an den Stator (2) angrenzenden Seite des Rotors (3) angeordnet ist.

3. Staubsammler gemäß Anspruch 2, ferner umfassend:
eine Schutzhülse (6), die über dem Rotor vorgesehen ist, um den Permanentmagneten (4) am Rotor (3) zu fixieren.

4. Staubsammler gemäß Anspruch 3, wobei die Schutzhülle (6) Folgendes umfasst:
ein Verbindungssegment (61), das in einer ringförmigen Form ausgebildet ist und mit einem Ende des Rotors (3) verbunden ist; und
ein Befestigungssegment (62), wobei ein Ende des Befestigungssegments (62) mit einem Umfang des Verbindungssegments (61) verbunden ist, das Befestigungssegment (62) um den Rotor (3) herum angeordnet und von einem Umfang des Rotors (3) beabstandet ist, um eine Aufnahmenut zu definieren,
und der Permanentmagnet (4) in der Aufnahmenut aufgenommen ist.

5. Staubsammler gemäß einem der Ansprüche 1 bis 4, wobei eine Vielzahl von Permanentmagneten (4) vorgesehen sind und die Vielzahl von Permanentmagneten (4) in Umfangsrichtung des Rotors (3) gleichmäßig beabstandet ist.

6. Staubsammler gemäß einem der Ansprüche 1 bis 5, wobei ein Isolierstück (72) an einem Ende benachbart zu der elektrischen Steuerplatine (8) des Stators (2) angeordnet ist, ein Vorsprung, (723) der sich in Richtung der elektrischen Steuerplatine (8) erstreckt, an dem Isolierstück (72) angeordnet ist und ein Ende des Vorsprungs (723) vom Stator (2) entfernt die elektrische Steuerplatine (8) kontaktiert.

7. Staubsammler gemäß einem der Ansprüche 1 bis 6, wobei der Permanentmagnet (4) aus magnetischem Stahl besteht.

8. Staubsammler gemäß einem der Ansprüche 1 bis 7, wobei der Rotor (3) innerhalb oder außerhalb des Stators (2) angeordnet ist.

9. Staubsammler gemäß einem der Ansprüche 1 bis 8, wobei der Permanentmagnet (4) am Rotor (3) haftet.

## Revendications

1. Collecteur de poussière, comprenant :
un boîtier définissant une entrée d'aspiration de poussière (1011) et un orifice d'évacuation d'air (11) espacés l'un de l'autre, et doté d'un panneau de commande électrique (8) dans celui-ci ;
un système de collecte de poussière disposé dans le boîtier de manière à filtrer un fluide pénétrant dans le boîtier par l'entrée d'aspiration de poussière (1011) ;
un impulseur (100) disposé dans le boîtier et situé en aval du système de collecte de poussière ; et
un moteur à courant continu sans balais du type à aimant permanent (200) disposé dans le boîtier, relié à l'impulseur (100), et situé sur un côté de l'impulseur (100) opposé au système de collecte de poussière, le moteur à courant continu sans balais du type à aimant permanent (200) comprenant un stator (2), un rotor (3) et un aimant permanent en forme de bloc (4), le rotor (3) étant disposé coaxialement avec le stator (2) et rotatif par rapport au stator (2),
et l'aimant permanent (4) étant fixé au rotor (3),
**caractérisé en ce que** :
le panneau de commande électrique (8) est un panneau de commande intégré, situé sur un côté axial du rotor (3), un capteur (9) étant disposé sur un côté du panneau de commande électrique intégré (8) adjacent au rotor (3), et le capteur (9) étant disposé adjacent à l'aimant permanent (4).

2. Collecteur de poussière selon la revendication 1, dans lequel l'aimant permanent (4) est disposé sur un côté du rotor (3) adjacent au stator (2).

3. Collecteur de poussière selon la revendication 2, comprenant en outre :
un manchon de protection (6) disposé sur le rotor de manière à fixer l'aimant permanent (4) au rotor (3).

4. Collecteur de poussière selon la revendication 3, dans lequel le manchon de protection (6) comprend :
un segment de raccordement (61) de forme annulaire, et raccordé à une extrémité du rotor (3) ; et
un segment de fixation (62), une extrémité du segment de fixation (62) étant raccordée à une périphérie du segment de raccordement (61), le segment de fixation (62) étant disposé autour du rotor (3) et espacé d'une périphérie du rotor (3) de manière à définir une rainure de réception, et l'aimant permanent (4) étant reçu dans la rainure de réception.

5. Collecteur de poussière selon l'une quelconque des revendications 1 à 4, dans lequel il est prévu une pluralité d'aimants permanents (4) et la pluralité d'aimants permanents (4) sont espacés uniformément dans une direction circonférentielle du rotor (3).

6. Collecteur de poussière selon l'une quelconque des revendications 1 à 5, dans lequel une pièce d'isolation (72) est disposée à une extrémité du stator (2) adjacente au panneau de commande électrique (8), une saillie (723) s'étendant vers le panneau de commande électrique (8) est disposée sur la pièce d'isolation (72), et une extrémité de la saillie (723) opposée au stator (2) touche le panneau de commande électrique (8).

7. Collecteur de poussière selon l'une quelconque des revendications 1 à 6, dans lequel l'aimant permanent (4) est constitué d'acier magnétique.

8. Collecteur de poussière selon l'une quelconque des revendications 1 à 7, dans lequel le rotor (3) est disposé à l'intérieur ou à l'extérieur du stator (2).

9. Collecteur de poussière selon l'une quelconque des revendications 1 à 8, dans lequel l'aimant permanent (4) est collé au rotor (3).
